# EUROPÄISCHE PATENTSCHRIFT

(11) **EP 3 928 391 B1**
(45) Veröffentlichungstag und Bekanntmachung des Hinweises auf die Patenterteilung: **04.01.2023**
(21) Anmeldenummer: 20703135.2
(22) Anmeldetag: 16.01.2020
(51) Int. Cl.: H02B 1/30

(54) **SCHALTSCHRANK MIT MINDESTENS EINER BÜRSTENLEISTE FÜR DIE LEITERDURCHFÜHRUNG**
CABINET WITH AT LEAST ONE BRUSH STRIP FOR THE CONDUCTOR FEEDTHROUGH
ARMOIRE DE DISTRIBUTION AVEC AU MOINS UNE BROSSE POUR LA TRAVERSÉE DU CONDUCTEUR

(30) Priorität: 19.02.2019 DE 102019104151
(43) Veröffentlichungstag der Anmeldung: 29.12.2021
(73) Patentinhaber: Rittal GmbH & Co. KG, 35745 Herborn (DE)
(72) Erfinder: THIELMANN, Bodo, 35768 Siegbach (DE); SAVASCI, Ahmet, 35683 Dillenburg (DE)
(74) Vertreter: Angerhausen, Christoph
(86) Internationale Anmeldenummer: PCT/DE2020/100028
(87) Internationale Veröffentlichungsnummer: WO 2020/169142

(56) Entgegenhaltungen:
- DE-A1- 10 210 754
- DE-B4- 10 210 754
- DE-U1-202017 002 614
- DE-U1-202017 002 614
- FR-A1- 2 701 607

## Beschreibung

Die Erfindung geht aus von einem Schaltschrank mit mindestens einer Bürstenleiste für die Leiterdurchführung.

Ein derartiger Schaltschrank ist aus der DE 102 107 54 A1 bekannt. Ähnliche Schaltschränke zeigen auch die DE 10 2015 121 192 A1, die FR 2 701 607 A1 und die DE 20 2017 002 614 U1.

Für die Einführung von Leitern, beispielsweise elektrischen Kabeln oder anderen Versorgungsleitungen in das Innere des Schaltschranks ist es bekannt, Bürstenleisten zu verwenden, die am Rahmengestell des Schaltschranks mit Hilfe von Käfigmuttern oder dergleichen über die Systemlochung des Rahmengestells festgelegt sind. Die Montage der Bürstenleisten ist damit in der Regel werkzeuggebunden und entsprechend aufwendig.

Es ist daher die Aufgabe der Erfindung, einen Schaltschrank der eingangs beschriebenen Art derart weiterzuentwickeln, dass er die einfache und insbesondere werkzeuglose Montage der Bürstenleiste am Rahmengestell des Schaltschranks erlaubt. Diese Aufgabe wird durch einen Schaltschrank mit den Merkmalen des Anspruchs 1 gelöst. Die abhängigen Ansprüche betreffen jeweils vorteilhafte Ausführungsformen der Erfindung.

Demgemäß ist vorgesehen, dass der Profilsteg ein umlaufender Dichtsteg des Profilrahmens ist und die Bürstenleiste auf ein freies Ende des Profilstegs mit sich von dem Profilsteg über den Innenumfang des Profilrahmens erstreckenden Borsten aufgesetzt ist. Die Erfindung macht sich somit den an dem Profilrahmen des Rahmengestells vorhandenen Profilsteg zu Nutze, welcher beispielsweise bei dem aus der DE 10 2015 121 192 A1 bekannten Rahmengestell ein Dichtsteg sein kann, mit Hilfe welches ein an dem Rahmengestell festgelegtes Flachteil - gegebenenfalls unter Zuhilfenahme eines zusätzlichen Dichtelements - gegenüber dem Rahmengestell abgedichtet werden kann.

An dem horizontalen oder vertikalen Profilrahmen kann mindestens ein den Profilrahmen anteilig verschließendes Wand- oder Dachblech montiert sein, das eine freie Kante aufweist, die sich parallel zu der Bürstenleiste erstreckt und auf Stoß an einer freien Borstenstoßkante der Bürstenleiste anliegt. Dabei kann das Wand- oder Dachblech eine zu der Bürstenleiste komplementäre, insbesondere gegenüber liegende, weitere Bürstenleiste aufweisen, deren freie Borstenenden die freie Kante des Wand- oder Dachblechs bilden.

Die Bürstenleiste kann einen Adapter mit einer Steckaufnahme aufweisen, über den die Bürstenleiste auf den Profilsteg aufgesteckt ist, wobei sich parallel zueinander erstreckende Borsten der Bürstenleiste einteilig mit dem Adapter ausgebildet sind.

Der Adapter kann an seiner von dem Profilsteg abgewandten Außenseite eine Anlagefläche für ein Flachteil des Schaltschranks aufweisen. Die Anlagefläche des Adapters kann eine Dichtfläche sein, an der das Flachteil mit einem Anpressdruck anliegt. Dabei kann der Adapter zumindest anteilig und vorzugsweise vollständig aus einem Dichtmaterial ausgebildet sein, von welchem die Borsten der Bürstenleiste über ihr von den freien Enden der Borsten abgewandtes Ende gehalten sind.

Der Profilsteg kann sich zu seinem freien Ende hin, über welches die Bürstenleiste über ihren Adapter auf dem Profilsteg aufgesetzt ist, aufweiten. Dabei kann die Steckaufnahme hinterschnittig ausgebildet sein. Die Steckaufnahme kann aus einem elastischen Material bestehen, so dass der Profilsteg im Wesentlichen formschlüssig in der Steckaufnahme aufgenommen ist.

Der Profilsteg kann am Innenumfang des Profilrahmens eine vertikale oder horizontale Profilseite und am Außenumfang des Profilrahmens eine dazu unter einem spitzen Winkel verlaufende weitere Profilseite aufweisen. Die Steckaufnahme kann einen Anschlag aufweisen, der an der vertikalen oder horizontalen Profilseite anliegt.

Die Steckaufnahme kann gegenüber von dem Anschlag von einem Spannabschnitt begrenzt sein, der in Bezug auf den Anschlag entgegen einer mechanischen Vorspannung zwischen einer Freigabeposition, in welcher der Adapter von dem Profilsteg gelöst ist, und einer Klemmposition, in welcher der Spannabschnitt an dem Profilsteg anliegt und mit der Vorspannung angedrückt ist, verlagert werden kann.

Zumindest die Steckaufnahme des Adapters kann einteilig und vollständig aus demselben Kunststoffmaterial, beispielsweise aus einem Elastomer oder einem Weichkunststoff, ausgebildet sein. Dabei kann der Anschlag eine um mindestens 30% größere Materialstärke als der Spannabschnitt aufweisen. Vorzugsweise weist der Anschlag eine um mindestens 50% größere Materialstärke als der Spannabschnitt auf.

Der Spannabschnitt kann an seinem freien Ende eine Knickstelle aufweisen, an der der Spannabschnitt in einen Endabschnitt übergeht, entlang welches der Spannabschnitt an einer Ablaufschräge am Außenumfang des Profilrahmens anliegt, in die der Profilsteg übergeht.

Der Profilrahmen kann ein Dachrahmen des Schaltschranks sein, bei dem das freie Ende des Profilstegs, auf den die Bürstenleiste aufgesteckt ist, eine horizontale umlaufende Dichtkante des Dachrahmens bildet. Der Dachrahmen kann an einem Außenumfang des Dichtstegs angrenzend an den Dichtsteg eine Ablaufschräge aufweisen, die in eine horizontale Regenrinne des Dachrahmens mündet.

Die Bürstenleiste, vorzugsweise ein Adapter der Bürstenleiste, kann an ihrer der Regenrinne zugewandten Seite einen Abweiser aufweisen, der sich von einem oberen Ende der Bürstenleiste, vorzugsweise von einem oberen Ende des Adapters, zu der Ablaufschräge hin, erstreckt. Der Abweiser kann als eine Dichtlippe ausgebildet sein, die am oberen Ende der Bürstenleiste und vorzugsweise am oberen Ende des Adapters festgelegt ist und sich unter einem Abstand zu dem Adapter in Richtung auf die Ablaufschräge zu erstreckt.

Die Bürstenleiste kann an ihrer Stirnseite eine Dichtkante aufweisen, an welcher eine Blechkante eines Wand- oder Dachblechs dichtend zur Anlage gebracht werden kann.

Der Schaltschrank kann ein Wand- oder Dachblech mit einem Ausbruch aufweisen, der mit Borsten der Bürstenleiste fluchtet oder in dem die Borsten der Bürstenleiste angeordnet sind, wobei die Bürstenleiste zwischen dem Wand- oder Dachblech und dem Profilrahmen angeordnet ist.

Weitere Einzelheiten der Erfindung werden anhand der nachstehenden Figuren erläutert. Dabei zeigt:
- Figur 1: eine erste Ausführungsform eines erfindungsgemäßen Schaltschranks in perspektivischer Darstellung eines Vertikalschnitts; und
- Figur 2: die Ausführungsform gemäß Figur 1, wobei die Bürstenleiste entfernt worden ist sowie mit angedeutetem Flachteil.

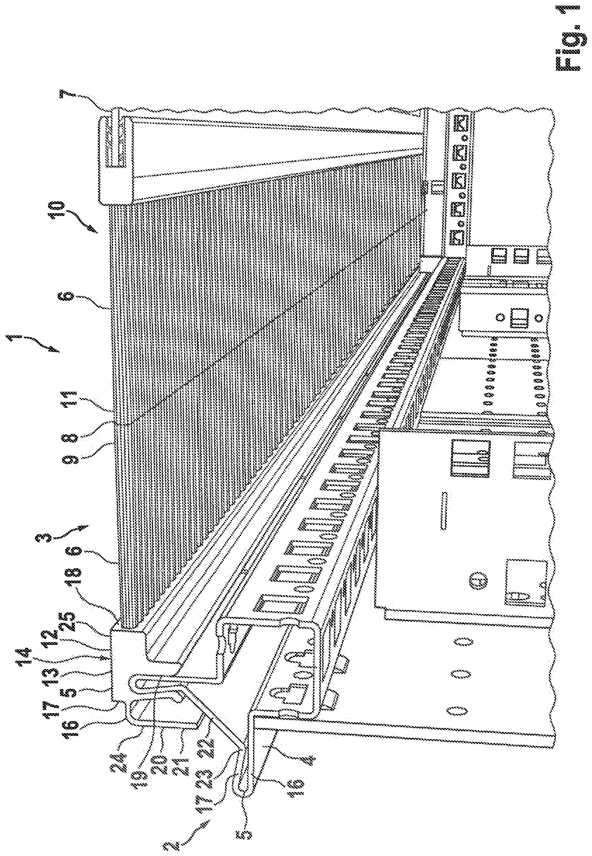

Die Figur 1 zeigt eine beispielhafte Ausführungsform eines Schaltschranks 1, bei dem das Rahmengestell 2 und insbesondere der Querschnitt der Profilstreben des Rahmengestells 2 eine Geometrie aufweist, wie sie aus der DE 10 2015 121 192 A1 bekannt ist. Das Rahmengestell 2 zeichnet sich dadurch aus, dass sich von den horizontalen und vertikalen Profilrahmen 4 des Rahmengestells 2 Profilstege 5 erstrecken, die hinterschnittig ausgebildet sind, das heißt zu ihrem freien Ende hin aufweiten.

Die Profilstege 5 sind Dichtstege, die sich von der vom Schaltschrank 1 abgewandten Außenseite des jeweiligen Profilrahmens 4 erstrecken und einen umlaufenden geschlossenen Profilstegrahmen bilden.Der umlaufend geschlossene Profilstegrahmen ist dazu verwendet, um ein Flachteil gegenüber dem jeweiligen Profilrahmen 4 abzudichten, gegebenenfalls unter Zuhilfenahme eines Dichtelements, welches beispielsweise an einer Innenseite des Flachteils aufgebracht ist und in welches sich der Profilsteg 5 über sein freies Ende hineindrückt, um das Rahmengestell 2 gegenüber dem Flachteil abzudichten.

Erfindungsgemäß wird dem Profilsteg 5 nunmehr eine zweite Funktion zugewiesen, indem er zur Halterung einer Bürstenleiste 3 verwendet wird, die auf das freie Ende des Profilstegs 5 aufgesteckt ist. Von der Bürstenleiste 3 erstrecken sich Borsten 6 über den Innenumfang des Profilrahmens 4. Der Profilrahmen 4 ist vorliegend ein Dachrahmen des Schaltschrankrahmengestells 2, welcher anteilig von einem Dachblech 7 verschlossen wird. Auf eine freie Längskante des Dachblechs 7 ist eine komplementäre Bürstenleiste 10 aufgesteckt, so dass die beiden Bürstenleisten 3, 10 über die freien Ende ihrer Borsten aneinanderstoßen und somit einen wirkungsvollen Schutz vor Staub und dem Eindringen anderer leichter Gegenstände in den Schaltschrankinnenraum bieten. Obwohl die beiden Bürstenleisten 3, 10 "auf Stoß" angeordnet sind, kann dies, wie es grundsätzlich aus dem Stand der Technik bekannt ist, umfassen, dass die Borsten der sich gegenüberstehenden Bürstenleisten 3, 10 zumindest anteilig ineinandergreifen bzw. überlappen.

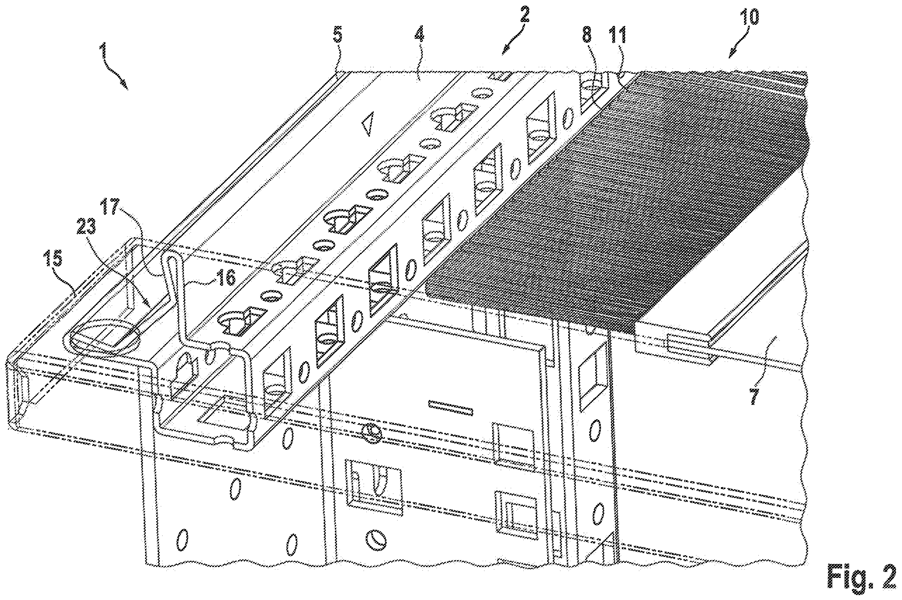

Die Bürstenleiste 3 weist einen Adapter 12 mit einer Steckaufnahme 13 auf, über den die Bürstenleiste 3 auf den als hinterschnittiger Dichtsteg ausgebildeten Profilsteg 5 aufgesteckt ist. Der Adapter 12 kann beispielsweise aus einem Elastomer oder einem Weichkunststoff einteilig mit den Borsten 6 der Bürstenleiste 3 ausgebildet sein. Insbesondere können die Borsten 6 in den Adapter 12 eingegossen sein. An der Oberseite weist der Adapter 12 eine Anlagefläche 14 für ein Flachteil 15 (siehe Figur 2) auf. Die Anlagefläche 14 kann insbesondere eine Dichtfläche sein, wozu die Anlagefläche 14 und vorzugsweise der gesamte Adapter 12 aus einem entsprechenden Dichtmaterial, beispielsweise aus einem Elastomer, gefertigt ist, so dass bei auf der Anlagefläche 14 aufliegendem Flachteil und Bereitstellung eines geeigneten Anpressdrucks des Flachteils auf die Anlagefläche 14 das Flachteil 15 gegenüber dem Profilrahmen 4 wirkungsvoll abgedichtet ist. Der Anpressdruck kann beispielsweise mit Hilfe gängiger Flachteilhalter für die Montage von Flachteilen an Schaltschrankrahmengestellen bereitgestellt sein.

Der Adapter 12 weist eine Steckaufnahme 13 auf, über die der Adapter 12 auf den Profilsteg 5 aufgesteckt ist. Die Steckaufnahme 13 ist als eine hinterschnittige Nut ausgebildet, die sich in Längsrichtung des Adapters und damit in Längsrichtung der Bürstenleiste 3 erstreckt. Um eine definierte Positionierung der Bürstenleiste 3 in Bezug auf den Profilrahmen 4 beim Aufstecken der Bürstenleiste auf den Profilrahmen 4, insbesondere auf den Profilsteg 5 zu erreichen, ist vorgesehen, dass die Steckaufnahme einen Anschlag 18 aufweist, der an einer zum Innenumfang des Profilrahmens 4 gerichteten vertikalen Profilseite 16 anliegt. Gegenüber dem Anschlag 18 weist die Steckaufnahme 13 einen Spannabschnitt 19 auf, der gemeinsam mit dem Anschlag 18 die Steckaufnahme 13 begrenzt.

Der Spannabschnitt 19 ist relativ zu dem Anschlag 18 entgegen einer mechanischen Vorspannung zwischen einer Freigabeposition, in welcher der Adapter 12 von dem Profilsteg 5 gelöst ist, und einer Klemmposition, in welcher der Spannabschnitt 19 an dem Profilsteg 5 anliegt und mit der Vorspannung angedrückt ist, verlagert werden. Dabei wird die sichere und definierte Vorpositionierung der Bürstenleiste 3 in Bezug auf den Profilsteg 5 dadurch erreicht, dass die Steckaufnahme 13 des Adapters 12 einteilig und vollständig aus demselben Kunststoffmaterial ausgebildet ist und der Anschlag 18 eine größere Materialstärke als der Spannabschnitt 19 aufweist. Vorzugsweise weist der Anschlag 18 eine um mindestens 30% größere Materialstärke als der Spannabschnitt 19 auf. Dadurch wird erreicht, dass beim aufdrücken der Bürstenleiste 3 auf den Profilsteg 5 die mechanische Vorspannung der Steckaufnahme 13 von dem Spannabschnitt 19 abgefangen wird, indem der Spannabschnitt 19 eine elastische Verformung erfährt, während der Anschlag 18 im Wesentlichen undeformiert verbleibt. Die senkrecht zu dem Anschlag 18 wirkende Vorspannung wiederum führt dazu, dass der Anschlag 18 gegen die vertikale Profilseite 16 am Innenumfang des Profilrahmens 4 gedrückt wird, wodurch die Bürstenleiste 3 eine definierte Position in Bezug auf den Profilrahmen 4 einnimmt.

Der Adapter 12 weist an seiner sich entlang des Außenumfangs des Profilrahmens 4 erstreckenden Seite einen Abweiser 24 auf, der sich von einem oberen Ende der Bürstenleiste 3, vorliegend angrenzend an den Spannabschnitt 19 und mit diesem einteilig ausgebildet, zu der Ablaufschräge 22 des Profilrahmens 4 hin erstreckt. Der als horizontaler Dachrahmen ausgebildete Profilrahmen 4 weist an seinem Außenumfang des Profilstegs 5 angrenzend an den Profilsteg 5 eine Ablaufschräge 22 auf, die in eine horizontale Regenrinne 23 des Dachrahmens mündet.

Die Zusammenschau der Figuren 1 und 2 zeigt, dass die erfindungsgemäße Anordnung der Bürstenleiste 3 an dem Profilrahmen 4 es ermöglicht, ein Flachteil 15, beispielsweise vorliegend ein Dachblech des Schaltschranks 1 wirkungsvoll gegenüber dem Rahmengestell 2 abzudichten. Wie bereits mit Bezug auf Figur 1 beschrieben worden ist, kann die Bürstenleiste 3 im Bereich ihres Adapters 12 aus einem elastischen Dichtmaterial ausgebildet sein, so dass eine Abdichtung des Flachteils 15 gegenüber dem Profilrahmen 4 erreicht wird, wenn das Flachteil 15 über die Anlagefläche 14 des Adapters 12 an den Profilrahmen 4 angedrückt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, solange sie in den Umfang der Ansprüche fallen.

### Bezugszeichenliste

- 1: Schaltschrank
- 2: Schaltschrankrahmengestell
- 3: Bürstenleiste
- 4: Profilrahmen
- 5: Profilsteg
- 6: Borsten
- 7: Wand- oder Dachblech
- 8: freie Kante
- 9: Borstenstoßkante
- 10: komplementäre Bürstenleiste
- 11: Borstenenden
- 12: Adapter
- 13: Steckaufnahme
- 14: Anlagefläche
- 15: Flachteil
- 16: Profil seite
- 17: weitere Profilseite
- 18: Anschlag
- 19: Spannabschnitt
- 20: Knickstelle
- 21: Endabschnitt
- 22: Ablaufschräge
- 23: Regenrinne
- 24: Abweiser
- 25: Dichtkante

## Patentansprüche

1. Schaltschrank (1) mit mindestens einer Bürstenleiste (3) für die Leiterdurchführung, wobei der Schaltschrank (1) ein Schaltschrankrahmengestell (2) mit einem horizontalen oder vertikalen Profilrahmen (4) aufweist, von dem sich ein Profilsteg (5) erstreckt, **dadurch gekennzeichnet, dass** der Profilsteg (5) ein umlaufender Dichtsteg des Profilrahmens (4) ist und die Bürstenleiste (3) auf ein freies Ende des Profilstegs (5) mit sich von dem Profilsteg (5) über den Innenumfang des Profilrahmens (4) erstreckenden Borsten (6) aufgesetzt ist.

2. Schaltschrank (1) nach Anspruch 1, bei dem an dem horizontalen oder vertikalen Profilrahmen (4) mindestens ein den Profilrahmen (4) anteilig verschließendes Wand- oder Dachblech (7) montiert ist, das eine freie Kante (8) aufweist, die sich parallel zu der Bürstenleiste (3) erstreckt und auf Stoß an einer freien Borstenstoßkante (9) der Bürstenleiste (3) anliegt.

3. Schaltschrank (1) nach Anspruch 2, bei dem das Wand- oder Dachblech (7) eine zu der Bürstenleiste (3) komplementäre Bürstenleiste (10) aufweist, deren freie Borstenenden (11) die freie Kante (8) des Wand- oder Dachblechs (7) bilden.

4. Schaltschrank (1) nach einem der vorangegangenen Ansprüche, bei dem die Bürstenleiste (3) einen Adapter (12) mit einer Steckaufnahme (13) aufweist, über den die Bürstenleiste (3) auf den Profilsteg (5) aufgesteckt ist, wobei sich parallel zueinander erstreckende Borsten (6) der Bürstenleiste (3) einteilig mit dem Adapter (12) ausgebildet sind.

5. Schaltschrank (1) nach Anspruch 4, bei dem der Adapter (12) an seiner von dem Profilsteg (5) abgewandten Außenseite eine Anlagefläche (14) für ein Flachteil (15) des Schaltschranks (1) aufweist.

6. Schaltschrank (1) nach Anspruch 5, bei dem die Anlagefläche (14) des Adapters (12) eine Dichtfläche ist, an der das Flachteil (15) mit einem Anpressdruck anliegt.

7. Schaltschrank (1) nach einem der Ansprüche 4 bis 6, bei der dem Adapter (12) zumindest anteilig und vorzugsweise vollständig aus einem Dichtmaterial ausgebildet ist, von welchem die Borsten (6) der Bürstenleiste (3) über ihr von den freien Enden der Borsten (6) abgewandtes Ende gehalten sind.

8. Schaltschrank (1) nach einem der Ansprüche 4 bis 7, bei dem sich der Profilsteg (5) zu seinem freien Ende hin, über welches die Bürstenleiste (3) über ihren Adapter (12) auf den Profilsteg (5) aufgesetzt ist, aufweitet, wobei die Steckaufnahme (13) hinterschnittig ausgebildet ist.

9. Schaltschrank (1) nach einem der Ansprüche 4 bis 7, bei dem der Profilsteg (5) am Innenumfang des Profilrahmens (4) eine vertikale oder horizontale Profilseite (16) und am Außenumfang des Profilrahmens (4) eine dazu unter einem spitzen Winkel verlaufende weitere Profilseite (17) aufweist, wobei die Steckaufnahme (13) einen Anschlag (18) aufweist, der an der vertikalen oder horizontalen Profilseite (16) anliegt.

10. Schaltschrank (1) nach Anspruch 9, bei dem die Steckaufnahme (13) gegenüber von dem Anschlag (18) von einem Spannabschnitt (19) begrenzt ist, der in Bezug auf den Anschlag (18) entgegen einer mechanischen Vorspannung zwischen einer Freigabeposition, in welcher der Adapter (12) von dem Profilsteg (5) gelöst ist, und einer Klemmposition, in welcher der Spannabschnitt (19) an dem Profilsteg (5) anliegt und mit der Vorspannung angedrückt ist, verlagert werden kann.

11. Schaltschrank (1) nach Anspruch 10, bei dem zumindest die Steckaufnahme (13) des Adapters (12) einteilig und vollständig aus demselben Kunststoffmaterial, beispielsweise einem Elastomer oder einem Weichkunststoff, ausgebildet ist, wobei der Anschlag (18) eine um mindestens 30% größere Materialstärke als der Spannabschnitt (19) aufweist.

12. Schaltschrank (1) nach Anspruch 10 oder 11, bei dem der Spannabschnitt (19) an seinem freien Ende eine Knickstelle (20) aufweist, an der der Spannabschnitt (19) in einen Endabschnitt (21) übergeht, entlang welches der Spannabschnitt (19) an einer Ablaufschräge (22) am Außenumfang des Profilrahmens (4) anliegt, in die der Profilsteg (5) übergeht.

13. Schaltschrank (1) nach einem der vorangegangenen Ansprüche, bei dem der Profilrahmen (4) ein Dachrahmen des Schaltschranks (1) ist, bei dem das freie Ende des Profilstegs (5), auf den die Bürstenleiste (3) aufgesteckt ist, eine horizontale umlaufende Dichtkante des Dachrahmens bildet, wobei der Dachrahmen an einem Außenumfang des Dichtstegs angrenzend an den Dichtsteg eine Ablaufschräge (22) aufweist, die in eine horizontale Regenrinne (23) des Dachrahmens mündet, und wobei die Bürstenleiste (3), vorzugsweise ein Adapter (12) der Bürstenleiste (3), an ihrer der Regenrinne (23) zugewandten Seite einen Abweiser (24) aufweist, der sich von einem oberen Ende der Bürstenleiste (3), vorzugsweise des Adapters (12), zu der Ablaufschräge (22) hin erstreckt.

14. Schaltschrank (1) nach einem der vorangegangenen Ansprüche, bei dem die Bürstenleiste (3) an ihrer Stirnseite eine Dichtkante (25) aufweist, an welcher eine Blechkante eines Wand- oder Dachblechs (7) dichtend zur Anlage gebracht werden kann.

15. Schaltschrank (1) nach einem der vorangegangenen Ansprüche, der ein Wand- oder Dachblech (7) mit einem Ausbruch aufweist, der mit Borsten (6) der Bürstenleiste (3) fluchtet oder in dem die Borsten (6) der Bürstenleiste (3) angeordnet sind, wobei die Bürstenleiste (3) zwischen dem Wand- oder Dachblech (7) und dem Profilrahmen (4) angeordnet ist.

## Claims

1. A switch cabinet (1) with at least one brush strip (3) for the conductor feed-through, the switch cabinet (1) having a switch cabinet frame (2) with a horizontal or vertical profile frame (4) from which a profile web (5) extends, characterized that the profile web (5) is a circumferential sealing web of the profile frame (4) and the brush strip (3) is placed on a free end of the profile web (5) with bristles (6) extending from the profile web (5) over the inner circumference of the profile frame (4).

2. The switch cabinet (1) according to claim 1, in which there is mounted on the horizontal or vertical profile frame (4) at least one wall or roof plate (7) which partially closes the profile frame (4) and has a free edge (8) which extends parallel to the brush strip (3) and butts against a free bristle butt edge (9) of the brush strip (3).

3. The switch cabinet (1) according to claim 2, wherein the wall or roof plate (7) comprises a further brush strip (10) complementary to the brush strip (3), the free bristle ends (11) of which form the free edge (8) of the wall or roof plate (7).

4. The switch cabinet (1) according to one of the preceding claims, in which the brush strip (3) has an adapter (12) with a plug-in receptacle (13), via which the brush strip (3) is plugged onto the profile web (5), bristles (6) of the brush strip (3) extending parallel to one another being formed integrally with the adapter (12).

5. The switch cabinet (1) according to claim 4, in which the adapter (12) has an abutment surface (14) for a flat part (15) of the switch cabinet (1) on its outer side facing away from the profile web (5).

6. The switch cabinet (1) according to claim 5, in which the contact surface (14) of the adapter (12) is a sealing surface against which the flat part (15) rests with a contact pressure.

7. The switch cabinet (1) according to any one of claims 4 to 6, in which the adapter (12) is formed at least partially and preferably completely from a sealing material, by which the bristles (6) of the brush strip (3) are held via their end facing away from the free ends of the bristles (6).

8. The switch cabinet (1) according to one of claims 4 to 7, in which the profiled web (5) widens towards its free end, via which the brush strip (3) is placed on the profiled web (5) via its adapter (12), the plug-in receptacle (13) being of undercut design.

9. The switch cabinet (1) according to one of claims 4 to 7, in which the profile web (5) has a vertical or horizontal profile side (16) on the inner circumference of the profile frame (4) and, on the outer circumference of the profile frame (4), a further profile side (17) running at an acute angle thereto, the plug-in receptacle (13) having a stop (18) which bears against the vertical or horizontal profile side (16).

10. The switch cabinet (1) according to claim 9, in which the plug-in receptacle (13) is delimited, opposite the stop (18), by a clamping section (19) which can be displaced, with respect to the stop (18), against a mechanical prestress, between a release position, in which the adapter (12) is released from the profile web (5), and a clamping position, in which the clamping section (19) bears against the profile web (5) and is pressed with the prestress.

11. The switch cabinet (1) according to claim 10, in which at least the plug-in receptacle (13) of the adapter (12) is formed in one piece and entirely from the same plastic material, for example an elastomer or a soft plastic, the stop (18) having a material thickness at least 30% greater than the clamping section (19).

12. The switch cabinet (1) according to claim 10 or 11, in which the clamping section (19) has at its free end a kink (20) at which the clamping section (19) merges into an end section (21) along which the clamping section (19) abuts against a run-off slope (22) on the outer circumference of the profile frame (4) into which the profile web (5) merges.

13. The switch cabinet (1) according to one of the preceding claims, in which the profile frame (4) is a roof frame of the switch cabinet (1), in which the free end of the profile web (5), onto which the brush strip (3) is fitted, forms a horizontal circumferential sealing edge of the roof frame, the roof frame having a drainage slope (22) on an outer circumference of the sealing web adjacent to the sealing web, which opens into a horizontal rain gutter (23) of the roof frame, and wherein the brush strip (3), preferably an adapter (12) of the brush strip (3), has on its side facing the rain gutter (23) a deflector (24) which extends from an upper end of the brush strip (3), preferably of the adapter (12), towards the drainage slope (22).

14. The switch cabinet (1) according to one of the preceding claims, in which the brush strip (3) has a sealing edge (25) at its end face, against which a sheet metal edge of a wall or roof sheet (7) can be brought into sealing contact.

15. The switch cabinet (1) according to any one of the preceding claims, which has a wall or roof plate (7) with an aperture which is aligned with bristles (6) of the brush strip (3) or in which the bristles (6) of the brush strip (3) are arranged, the brush strip (3) being arranged between the wall or roof plate (7) and the profile frame (4).

## Revendications

1. Armoire de commande (1) avec au moins un joint-balai (3) pour le passage de conducteurs, dans laquelle l'armoire de commande (1) comprend un châssis d'armoire de commande (2) avec un cadre profilé horizontal ou vertical (4) à partir duquel s'étend une nervure profilée (5), **caractérisée en ce que** la nervure profilée (5) est une nervure d'étanchéité périphérique du cadre profilé (4) et le joint-balai (3) est posé sur une extrémité libre de la nervure profilée (5) avec des poils (6) s'étendant à partir de la nervure profilée (5) sur la périphérie interne du cadre profilé (4).

2. Armoire de commande (1) selon la revendication 1, dans laquelle, sur le cadre profilé horizontal ou vertical (4), est montée au moins une tôle de paroi ou de toit (7) fermant partiellement le cadre profilé (4), qui comprend une arête libre (8) qui s'étend parallèlement au joint-balai (3) et s'appuie en butée contre un bord de poil libre (9) du joint-balai (3).

3. Armoire de commande (1) selon la revendication 2, dans laquelle la tôle de paroi ou de toit (7) comprend un joint-balai (10) complémentaire du joint-balai (3), dont les extrémités libres des poils (11) constituent l'arête libre (8) de la tôle de paroi ou de toit (7).

4. Armoire de commande (1) selon l'une des revendications précédentes, dans laquelle le joint-balai (3) comprend un adaptateur (12) avec un logement d'enfichage (13), par l'intermédiaire duquel le joint-balai (3) est enfiché sur la nervure profilée (5), dans laquelle des poils (6), s'étendant parallèlement entre eux, du joint-balai (3) sont formés d'une seule pièce avec l'adaptateur (12).

5. Armoire de commande (1) selon la revendication 4, dans laquelle l'adaptateur (12) comprend, sur son côté extérieur opposé à la nervure profilée (5), une surface d'appui (14) pour une partie plate (15) de l'armoire de commande (1).

6. Armoire de commande (1) selon la revendication 5, dans laquelle la surface d'appui (14) de l'adaptateur (12) est une surface d'étanchéité contre laquelle la partie plate (15) s'appuie avec une pression.

7. Armoire de commande (1) selon l'une des revendications 4 à 6, dans laquelle l'adaptateur (12) est constitué au moins partiellement et de préférence entièrement d'un matériau d'étanchéité par lequel les poils (6) du joint-balai (3) sont maintenus par l'intermédiaire de leur extrémité opposée aux extrémités libres des poils (6).

8. Armoire de commande (1) selon l'une des revendications 4 à 7, dans laquelle la nervure profilée (5) s'élargit en direction de son extrémité libre, par l'intermédiaire de laquelle le joint-balai (3) est posé, par l'intermédiaire de son adaptateur (12), sur la nervure profilée (5), dans laquelle le logement d'enfichage (13) est réalisé avec une contre-dépouille.

9. Armoire de commande (1) selon l'une des revendications 4 à 7, dans laquelle la nervure profilée (5) comprend, sur la périphérie interne du cadre profilé (4), un côté profilé vertical ou horizontal (16) et, sur la périphérie externe du cadre profilé (4), un autre côté profilé (17) s'étendant avec un angle aigu par rapport à celui-ci, dans laquelle le logement d'enfichage (13) comprend une butée (18) qui s'appuie contre le côté profilé vertical ou horizontal (16).

10. Armoire de commande (1) selon la revendication 9, dans laquelle le logement d'enfichage (13) est limité, en face de la butée (18), par une portion de serrage (19) qui peut être déplacée, par rapport à la butée (18), contre une précontrainte mécanique, entre une position de desserrage, dans laquelle l'adaptateur (12) est détaché de la nervure profilée (5), et une position de serrage, dans laquelle la portion de serrage (19) s'appuie contre la nervure profilée (5) et est comprimée avec la précontrainte.

11. Armoire de commande (1) selon la revendication 10, dans laquelle le logement d'enfichage (13) de l'adaptateur (12) est réalisé d'une seule pièce et entièrement de la même matière plastique, par exemple un élastomère ou une matière plastique souple, dans laquelle la butée (18) présente une épaisseur de matériau d'au moins 30 % supérieure à celle de la portion de serrage (19).

12. Armoire de commande (1) selon la revendication 10 ou 11, dans laquelle la portion de serrage (19) comprend, au niveau de son extrémité libre, un point de flexion (20) au niveau duquel la portion de serrage (19) se transforme en une portion d'extrémité (21) le long de laquelle la portion de serrage (19) s'appuie contre une rampe (22) sur la périphérie externe du cadre profilé (4), dans laquelle la nervure profilée (5) se transforme.

13. Armoire de commande (1) selon l'une des revendications précédentes, dans laquelle le cadre profilé (4) est un cadre de toit de l'armoire de commande (1), dans laquelle l'extrémité libre de la nervure profilée (5), sur laquelle est enfiché le joint-balai (3), constitue un bord d'étanchéité périphérique horizontale du cadre de toit, dans laquelle le cadre de toit comprend, sur une périphérie externe de la nervure d'étanchéité, de man_ère adjacente à la nervure d'étanchéité, une rampe (22) qui débouche dans une gouttière horizontale (23) du cadre de toit et dans laquelle le joint-balai (3), de préférence un adaptateur (12) du joint-balai (3), comprend, au niveau de son côté orienté vers la gouttière (23), un déflecteur (24) qui s'étend d'une extrémité supérieure du joint-balai (3) de préférence de l'adaptateur (12), en direction de la rampe (22).

14. Armoire de commande (1) selon l'une des revendications précédentes, dans laquelle le joint-balai (3) comprend, sur sa face frontale, un bord d'étanchéité (25) contre lequel un bord de tôle d'une tôle de paroi ou de toit (7) peut être mis en appui de manière étanche.

15. Armoire de commande (1) selon l'une des revendications précédentes, qui comprend une tôle de paroi ou de toit (7) avec un perçage qui est aligné avec les poils (6) du joint-balai (3) ou dans lequel les poils (6) du joint-balai (3) sont disposés, dans laquelle le joint-balai (3) est disposé entre la tôle de paroi ou de toit (7) et le cadre profilé (4).
